(19) Europäisches Patentamt
European Patent Office
Office européen des brevets

(11) Publication number: **0 164 874**
**B1**

(12) # EUROPEAN PATENT SPECIFICATION

(45) Date of publication of patent specification: **26.04.89**

(51) Int. Cl.$^4$: **C 08 F 212/12,** C 08 L 25/16 // (C08F212/12, 220:44)

(21) Application number: **85303146.6**

(22) Date of filing: **02.05.85**

(54) **Process for producing a heat-resistant copolymer of alpha-methylstyrene and acrylonitrile, and thermoplastic resin composition containing the same.**

(30) Priority: **05.06.84 JP 113853/84**
**29.06.84 JP 133056/84**

(43) Date of publication of application:
**18.12.85 Bulletin 85/51**

(45) Publication of the grant of the patent:
**26.04.89 Bulletin 89/17**

(84) Designated Contracting States:
**DE GB IT NL**

(56) References cited:
**EP-A-0 041 703**
**EP-A-0 042 572**
**US-A-4 427 832**

(73) Proprietor: **JAPAN SYNTHETIC RUBBER CO., LTD.**
**11-24, Tsukiji-2-chome Chuo-ku**
**Tokyo 104 (JP)**

(72) Inventor: **Shimozato, Yasuyuki**
**1-17-404, Morigayamacho**
**Yokkaichi-shi (JP)**
Inventor: **Tsuchikawa, Syuji**
**10-1, Mitakidai-1-chome**
**Yokkaichi-shi (JP)**
Inventor: **Kimura, Shinichi**
**12-16, Mitakidai-4-chome**
**Yokkaichi-shi (JP)**
Inventor: **Noro, Masahiko**
**Aobaryo, 29, Aobadai-2-chome**
**Midori-ku Yokohama (JP)**

(74) Representative: **Tubby, David George et al**
**MARKS & CLERK 57-60 Lincoln's Inn Fields**
**London WC2A 3LS (GB)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 164 874 B1

**Description**

This invention relates to a process for producing an α-methylstyrene-acrylonitrile copolymer resin having excellent heat stability and mouldability and whose heat resistance does not deteriorate when moulded at high temperatures, and to a thermoplastic composition comprising such a copolymer resin produced by the said process.

Thermoplastic resin produced by graft-copolymerizing styrene and acrylonitrile on a polybutadiene rubber are widely used as resins (ABS resin) having excellent impact and heat resistance. However, improving their performance for use in light electrical appliances and automobiles leads to a strong desire to enhance the heat resistance of structural materials. In order to meet such a desire, attempts have been made to improve the properties of the graft copolymer by replacing the styrene by α-methylstyrene. Generally, an increase in the α-methylstyrene content results in an improvement in the heat resistance of the resin, but, on the other hand, the impact strength and mouldability of the resin are badly deteriorated, and, thus, the commercially desired resin having well-balanced qualities cannot be obtained.

This is because the heat resistance, impact resistance and mouldability of α-methylstyrene-containing ABS resins depend on the proportions of α-methylstyrene and acrylonitrile which are polymerizing components (which proportions affect the glass transition temperature of the polymer) and on the molecular weight of each of these components. In other words, an increase in the glass transition temperature leads to an improvement in heat resistance and a reduction in impact resistance and mouldability; on the other hand, an increase in molecular weight results in an improvement in imnpact strength and a reduction in mouldability. Therefore, it is impossible to obtain a resin satisfying simultaneously all of the requirements of heat resistance, impact resistance and processability by conventional methods in which merely the proportions of the components are varied or the molecular weight of the polymer is varied.

A method in which an α-methylstyrene-acrylonitrile copolymer is mixed with an acrylonitrile-butadiene-styrene copolymer has also been used to improve the heat resistance of rubber-modified thermoplastic resins, including ABS resins. These thermoplastic resins are now commonly used as interior materials in automobiles and light electrical appliances, but they still suffer from the problem of deformation in use at high temperatures. A high moulding temperature is required in order to obtain a large-sized article by injection moulding, and, in this case, heat stability of the resin is especially required.

In order to solve this problem, it has been proposed to increase the α-methylstyrene content in the resin as much as possible (see Japanese Patent Publication No. 12,300/83). This can improve the heat resistance but causes a reduction in heat stability of the resin during moulding at high temperatures.

In the copolymerization of α-methylstyrene (αMS) and acrylonitrile (AN), as disclosed in Japanese Patent Publication No. 33,661/70, the polymerization conversion decreases as the amount of αMS increases from the ratio of αMS:AN=70:30 (azeotropic composition). Therefore, even if polymerization is carried out using a monomer composition having a grater αMS content than that in the azeotropic composition, in the hope of obtaining a copolymer having a higher αMS content and in order to produce a copolymer with a high heat resistance, it is found that when the monomer composition has a high αMS content the polymerization conversion is low and unreacted monomer remains in a large quantity in the resin obtained by conventional recovery methods, so that it is still impossible to obtain a resin composition with a high heat resistance by this method.

EP—A—41703 describes a process in which the αMS/AN weight ratio at the start of polymerization is 15:1, much higher than in the present invention. In the latter half of the polymerization, the αMS/AN ratio is controlled to 2.2 or less by weight (1.0 or less by mole). Accordingly, in EP—A—41703, the polymer composition has a high —[(A)—(A)—(A)]— content in the former half of the polymerization and has a high AN chain —[(B)—(B)]— content in the latter half of the polymerization. This is contrary to the teachings of the present invention, and the polymer composition obtained is inferior in processability in high temperature molding and the molded product is coloured.

EP—A—42572 also describes a process in which the αMS/AN ratio in the feed is very high. The polymerization temperature is 60°C. These values are outside the teachings of the present invention. Consequently, the composition of the polymer obtained has an —[(A)—(A)—(A)]— content exceeding that of the present invention and this again results in deterioration of processability in high temperature molding.

More specifically, the prior art composition loses thermal stability and exhibits light-coloured streaks.

US—A—4 427 832 describes a process where the αMS/AN ratio is 1.3—3.0 (by mole). This corresponds to 2.9—6.7 by weight, which is outside the scope of the present invention. Moreover, the —[(A)—(A)—(B)]— content is low and hence, enhancement of heat resistance is not achieved.

We have now discovered how to produce an α-methylstyrene-acrylonitrile copolymer resin having a low deformation at high temperatures and a high heat stability during moulding at high temperatures without impairing the heat resistance of the resin.

The present invention, is concerned with production of a heat-resistant copolymer [hereinafter referred to as heat-resistant copolymer (I)] containing (A) from 74 to 82 parts by weight of α-methylstyrene and (B) from 26 to 18 parts by weight of acrylonitrile, and (a) the monomer chain —[(A)—(A)—(A)]— in a proportion of from 0 to 15% by weight, (b) the monomer chain —[(A)—(A)—(B)]— in a proportion of 50% by weight or

more and (c) the monomer chain —[(B)—(A)—(B)]— in a proportion of from 50 to 0% by weight, the total of (a), (b) and (c) being 100% by weight.

The present invention in one aspect provides a process for producing the heat-resistant copolymer (I) which comprises initially charging and mixing α-methylstyrene and acrylonitrile at a weight ratio of α-methylstyrene to acrylonitrile of less than 9:1, emulsifying the mixture, initiating the polymerization of these monomers at a temperature of from 67 to 90°C, and continuing the polymerization in said temperature range while continuously or intermittently supplying acrylonitrile or a mixture of α-methylstyrene and acrylonitrile so that the α-methylstyrene to acrylonitrile ratio by weight in the unreacted monomers in the system is kept at 7:1 or more, preferably in the range of 7:1 to 9.5:1.

The invention also provides a thermoplastic resin composition comprising a heat-resistant copolymer (I) produced by the above process and having an intrinsic viscosity of 0.2 to 0.7 dl/g, a copolymer (II) having an intrinsic viscosity of 0.3 to 0.8 dl/g and (a) consisting of, as its constituents, from 50 to 74% by weight of α-methylstyrene, from 26 to 33% by weight of an alkenyl cyanide and from 0 to 24% by weight of other monomer(s) copolymerisable with these monomers: and (b) the weight ratio of the heat-resistant copolymer (I) to the total of the heat-resistant copolymer (I) and the copolymer (II) being from 0.4:1 to 0.8:1; and from 20 to 50% by weight, based on the total weight of copolymers (I), (II) and (III) of a rubber-modified thermoplastic resin (III) obtained by graft-copolymerizing from 30 to 80% by weight of an aromatic alkenyl monomer, an alkenyl cyanide monomer on from 20% to 70% by weight of a rubber-like polymer; the total residual monomer content in the composition being 2000 ppm or less and the total rubber content in the composition being from 10 to 30% by weight; wherein when copolymer (II) consists of (A) α-methylstyrene and (B) acrylonitrile copolymer (I) contains from 0 to 15% by weight of monomer chains —[(A)—(A)—(A)]—, from 55 to 100% by weight of monomer chains —[(A)—(A)—(B)]— and from 45 to 0% by weight of monomer chains —[(B)—(A)—(B)]—, totalling 100%, and copolymer (II) has a ratio of the total of monomer chains —[(A)—(A)—(A)]— and —[(A)—(A)—(B)]— being 50% by weight or less of the total of said two monomer chains plus another monomer chain —[(B)—(A)—(B)]—; the intrinsic viscosities being measured in methyl ethyl ketone at 30°C.

Blending of said copolymer (II) and copolymer (III) with the heat-resistant copolymer (I) gives a composition with excellent mouldability, and especially, the blending of the copolymer (III) produces a composition with excellent impact resistance.

In the production of the heat-resistant copolymer (I), the type of αMS chain formed depends on the reaction conditions in the copolymerization of α-methylstyrene as component (A) and acrylonitrile as component (B), the amouint of the monomer copolymerized and the monomer reactivity. Monomer chains include the following three different monomer chains:

(a) —[(A)—(A)—(A)]— (chain of three αMS units)
(b) —[(A)—(A)—(B)]— (chain of two αMS units)
(c) —[(B)—(A)—(B)]— (chain of one αMS unit)

One of the important features of the present invention is that the content of the monomer chains (a) is adjusted to 15% by weight or less, preferably 13% by weight or less, more preferably 10% by weight or less, of the total amount (100% by weight) of (a), (b) and (c). If the content of the monomer chain (a) exceeds 15%, violent decomposition takes place during moulding at high temperatures, which causes moulding thermal instability and greatly reduces the workability. Also, the monomers resulting from the decomposition remain in the moulded article, which reduces the heat resistance of the article.

On the other hand, in order to maintain the heat resistance of the resin, it is necessary to control the ratio of the monomer chains (b) (—[(A)—(A)—(B)]—) to 50% by weight or more, preferably from 55 to 100% by weight, of the total weight of (a), (b) and (c), and to control the ratio of the monomer chain (c) (—[(B)—(A)—(B)]—) to 50% by weight or less, preferably in the range of from 45 to 0% by weight, of the total weight of (a), (b) and (c).

The heat-resistant copolymer (I) of this invention can be obtained by copolymerizing from 74 to 82 parts, preferably from 76 to 80 parts, by weight of αMS and from 18 to 26 parts, preferably from 24 to 20 parts, by weight of AN. If the amount of αMS is less than 74 parts by weight. The proportion of monomer chains (c) becomes too high to maintain the heat resistance, whereas, if it exceeds 82 parts by weight, it follows that the monomer chains (a) are formed in excess and the heat stability deteriorates.

In the present invention, in addition to αMS and AN, there may be used other copolymerizable monomers, for example, aromatic alkenyl compounds other than αMS, such as styrene, and acrylic or methacrylic esters, such as methyl methacrylate (MMA), in an amount of not more than 10% by weight, provided that it does not impair the object of this invention.

The process for producing the heat-resistant copolymer (I) of this invention comprises copolymerizing αMS and AN by charging αMS and AN so that the αMS:AN ratio by weight is 9:1 or less, preferably from 6.5:1 to 8.5:1 at the start of the polymerization, adding a polymerization initiator to initiate the polymerization at a temperature of from 67 to 90°C, preferably from 70 to 85°C, and supplying AN or both αMS and AN continuously or intermittently in the above temperature range over a long period of time while controlling the unreacted monomer concentration in the system so that the αMS:AN ratio by weight can be kept at 7:1 or more, preferably from 7:1 to 12:1, more preferably from 7:1 to 9.5:1 to complete the

polymerization. The polymerization conversion is not critical, but it is preferably not less than 85% by weight.

If the αMS:AN ratio in the system is less than 7:1, the ratio of the monomer chains (c) —[(B)—(A)—(B)]— increases while the ratio of the monomer chains (b) —[(A)—(A)—(B)]— decreases, and, hence, the desired effect on heat resistance cannot be obtained. On the other hand, the use of too high an αMS:AN ratio results in too high a proportion of the monomer chains (a) —[(A)—(A)—(A)]—, and makes it impossible to obtain the desired effect on thermal stability.

Also, if the polymerization temperature is less than 67°C, the ratio of the monomer chains (a) —[(A)—(A)—(A)]— becomes too large to achieve the desired effect on heat stability, while the use of a polymerization temperature exceeding 90°C results in an increase in the ratio of the monomer chains (c) —[(B)—(A)—(B)]— and a decrease in the stability of the latex produced.

This emulsion polymerization can be accomplished by a conventional method under the usual conditions.

As the emulsifying agent used in the emulsion polymerization, there may be used anionic surfactants such as sodium or potassium salts of rosin acid or of higher fatty acids, for example, lauric acid or oleic acid; sodium or potassium salts of alkylbenzenesulfonic acids; sodium or potassium salts of sulphuric esters of higher alcohols; polyethylene oxide alkyl ether sulphates; and polyethylene oxide alkylphenyl ether sulphates; these may be used alone or in admixture of two or more. It is also possible to use a nonionic surfactant alone or in admixture with the anionic surfactant.

The polymerization catalyst is not critical, but, in this invention, there may be used a persulphate or a redox catalyst comprising a combination of an organic peroxide (such as cumene hydroperoxide, diisopropylbenzene hydroperoxide or paramenthane hydroperoxide) with a reducing agent (such as a sugar-containing pyrophosphoric acid recipe or a sulphoxylate recipe). Of these, a redox catalyst based on the sugar-containing pyrophosphate recipe is preferred as its use enables the polymerization more easily to be conducted in the required temperature range.

It is also possible to use a molecular weight regulator, a polymerization stabilizer and other additives which are generally used in emulsion polymerization.

The ratios of the αMS-containing monomer chains —[(A)—(A)—(A)]—, —[(A)—(A)—(B)]— and —[(B)—(A)—(B)]— are decided based on the NMR peak of the aromatic carbon atom at the 1-position of αMS and its area ratio as described below.

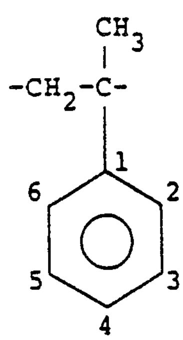

The distribution of each of the monomer chains (a), (b) and (c) is determined by dissolving a copolymer in deuterated chloroform, measuring the $^{13}C$—NMR using tetramethylsilane as an internal standard, and taking, among the peaks appearing at 140—150 ppm, the peak in the range of from 141 to 144 ppm as that of monomer chain (c) —[(B)—(A)—(B)]—, the peak in the range of from 144.5 to 147 ppm as that of monomer chain (b) —[(A)—(A)—(B)]—, and the peak in the range of from 147.5 to 150 ppm as that of monomer chain (a) —[(A)—(A)—(A)]—, and measuring the areas of these peaks.

The intrinsic viscosity [η], as measured in methyl ethyl ketone at 30°C, of the heat-resistant copolymer (I) of the present invention is from 0.2 to 0.7 dl/g, preferably from 0.25 to 0.5 dl/g.

Copolymer (II) is a copolymer consisting of from 50 to 74% by weight, preferably from 60 to 72% by weight of α-methylstyrene (αMS), from 26 to 33% by weight, preferably from 28 to 31% by weight, of alkenyl cyanide and from 0 to 24% by weight of a monomer copolymerizable with these monomers, in which preferably the proportion of the total of the monomer chains —[A—A—A]—]— and —[A—A—B]— is 50% or less based on the total of said two monomer chains and another monomer chain —[B—A—B]—. If the amount of αMS in the copolymer is less than 50% by weight, the heat resistance is not satisfactory and if it exceeds 74% by weight the processability and impact resistance are not satisfactory. The intrinsic viscosity [η], as measured in methyl ethyl ketone at 30°C of the copolymer (II) [which is a measure of the size of the molecule of the copolymer (II)] is in the range of from 0.3 to 0.8, preferably from 0.35 to 0.7 dl/g. If the intrinsic viscosities of the heat-resistant copolymer (I) and the copolymer (II) are below their respective ranges defined above, the impact resistance of the resin produced becomes low, and, if they exceed said ranges, the processability becomes inferior.

In order to obtain a thermoplastic resin composition in which the heat resistance, impact resistance and mouldability are all excellent, the heat-resistant copolymer (I) is mixed with the copolymer (II) in a weight ratio of the heat-resistant copolymer (I) to the sum of the heat resistant copolymer (I) plus the copolymer (II) of from 0.4:1 to 0.8:1, preferably from 0.55:1 to 0.75:1. If the ratio is above this range, that is if the content of heat-resistant copolymer (I) becomes larger, the composition becomes inferior in impact resistance, and, if the content of the heat-resistant copolymer (I) becomes smaller, sufficient heat resistance is not obtained. In both the heat-resistant copolymer (I) and the copolymer (II), α-methylstyrene and acrylonitrile may be copolymerized with other copolymerizable monomers which include styrene or styrene derivatives, such as nuclear bromine-substituted styrene, nuclear chlorine-substituted styrene and nuclear methyl-substituted styrene, and acrylic and methacrylic esters, such as methyl acrylate, ethyl acrylate, methyl methacrylate and ethyl methacrylate.

In accordance with this invention, a thermoplastic resin composition having good impact resistance is obtained by mixing the heat-resistant resin consisting of the heat-resistant copolymer (I) or a mixture of the heat-resistant copolymer (I) and the copolymer (II) with a rubber-modified thermoplastic resin [copolymer (III)] obtained by graft-copolymerizing an aromatic alkenyl compound, an alkenyl cyanide compound and, if necessary, other copolymerizable alkenyl monomer(s) such as an acrylic or methacrylic ester on a rubber component.

Examples of the rubber component used in the preparation of the rubber-modified resin [copolymer (III)] include polybutadiene, acrylonitrile-butadiene copolymer, styrene-butadiene copolymer, ethylene-propylene copolymer rubber, ethylene-propylene ethylidenenorbornene copolymer rubber, acrylic rubber, natural rubber, polyisoprene, polychloroprene, and rubbers formed by coupling them with tin or lithium, and styrene-butadiene block copolymer. These rubbers may be used alone or in admixture of two or more.

Examples of the aromatic alkenyl compounds usable for said purpose are styrene, *o*-methylstyrene, *m*-methylstyrene, *p*-methylstyrene, chlorostyrene, dichlorostyrene, bromostyrene, dibromostyrene, α-methylstyrene, α-ethylstyrene, methyl-α-methylstyrene, dimethylstyrene and vinylnaphthalene. These compounds may be used alone or in admixture of two or more. Styrene, α-methylstyrene and *p*-methylstyrene are preferred.

Examples of the alkenyl cyanide compounds usable for the preparation of the copolymer (III) are acrylonitrile and methacrylonitrile.

Examples of the (meth)acrylic esters include methyl acrylate, ethyl acrylate, butyl acrylate, methyl methacrylate, ethyl methacrylate, β-hydroxyethyl acrylate and β-hydroxyethyl methacrylate, of which methyl methacrylate is preferred.

In a preferred graft copolymer, the content of the rubber component is from 20 to 70% by weight, the grafting degree (the ratio of the grafted monomers to the rubber component) is 25% or more in view of heat resistance, and the intrinsic viscosity [η], as measured in methyl ethyl ketone at 30°C, of the ungrafted component (methyl ethyl ketone solubles) is from 0.2 to 1.0 dl/g in view of impact resistance and processability. The content of the rubber component is more preferably from 30 to 70% by weight, most preferably from 40 to 70% by weight; the grafting degree is more preferably 30% or more, most preferably 40% or more; and the intrinsic viscosity [η] of the ungrafted component is more preferably from 0.25 to 0.8 dl/g.

The rubber-modified thermoplastic resin [copolymer (III)] can be produced most advantageously by emulsion polymerization. The polymerization catalyst used is not critical, but the use of a redox catalyst is preferred. Dextrose, pyrophosphate and ferrous sulphate are preferably used as the reducing agent of the redox catalyst, and the amounts of these reducing agents are preferably: from 0.3 to 0.9 part by weight in the case of dextrose; from 0.2 to 0.6 part by weight in the case of pyrophosphate; and from 0.004 to 0.012 part by weight in the case of ferrous sulphate; per 100 parts by weight of the total of the diene rubber and the monomers.

The oxidizing agent in the redox catalyst is not critical, but, for instance, cumene hydroperoxide, diisopropylbenzene hydroperoxide, *p*-menthane hydroperoxide or t-butyl hydroperoxide may preferably be used as the oxidizing agent. The amount of oxidizing agent used is preferably from 0.1 to 0.5 part by weight per 100 parts by weight of the total of the rubber charged and the monomers charged.

The emulsifying agent used for the graft-copolymerization is also not critical, but potassium and sodium salts of oleic acid, lauric acid, disproportionated rosin acid, dodecylbenzenesulphonic acid and the like are preferably used as the emulsifying agent. The amount of emulsifying agent used for said graft-copolymerization is preferably from 0.1 to 1.0 part by weight per 100 parts by weight of the total of the rubber charged and the monomers charged. The use of such an emulsifying agent in such an amount in the graft-copolymerization can inhibit the formation of agglomerates and also helps to increase the impact strength of the resin produced.

These catalysts may be added at one time or portionwise. Also, they may be added continuously.

The graft polymerization is effected by first adding a part of the monomer mixture to the whole of the diene rubber charged, initiating the polymerization with a redox catalyst, and then continuously adding the rest of the monomer mixture over a long period of time while using a specified amount of a molecular weight regulator.

The monomeric components used for the graft-copolymerization may be added at one time to the diene rubber latex, but it is preferred to add a part or the whole of the monomer mixture continuously or

portionwise over more than one hour. The diene rubber latex preferably has an average particle size in the range of from 50 to 600 nm (from 500 to 6,000 A) because the impact strength is improved.

The mixing ratio of the heat-resistant resin composition consisting of the heat-resistant copolymer (I) and the copolymer (II) to the rubber-modified thermoplastic resin [copolymer (III)] is from 50:50 to 80:20, more preferably from 55:45 to 75:25, by weight. The proportion of the copolymer (III) is preferably not less than 20% by weight in respect of impact resistance; however, if it exceeds 50% by weight, the heat resistance and processability deteriorate.

By blending the graft copolymer in the above-mentioned amount, the excellent heat resistance and heat stability of the heat-resistant resin composition of this invention can be more effectively imparted to the impact-resistant resin.

If the content of the rubber-like polymer in the copolymer (III) is less than 20%, the proportions of the heat-resistant copolymer (I) and the copolymer (II) become too small since the content of the rubber-like polymer in the thermoplastic resin composition obtained by mixing heat-resistant copolymer (I), the copolymer (II) and the copolymer (III) should be from 10 to 30% by weight and too high a proportion (III) is required to achieve this; it is thus difficult to obtain a resin composition having satisfactory heat and impact resistance. On the other hand, if the rubber-like polymer content exceeds 70%, the amount of the resin component grafted on the rubber-like polymer becomes too small to impart the satisfactory impact resistance to the composition.

The content of the rubber-like polymer component in the composition comprising the heat-resistant copolymer (I) and the copolymers (II) and (III) is from 10 to 30% by weight, preferably from 10 to 25% by weight. If this content is less than 10% by weight, the impact resistance is undesirably low, whereas, if it exceeds 30% by weight, the rigidity of the product is lowered, which invites deterioration of heat resistance.

The heat-resistant copolymer (I) and the copolymer (II) used for obtaining the thermoplastic resin composition according to this invention can be produced by an appropriate polymerization technique, such as emulsion polymerization, solution polymerization, suspension polymerization, but emulsion polymerization is preferred. Also, the mixing of the heat-resistant copolymer (I) with the copolymers (II) and (III) can be suitably accomplished in the form of emulsified latex, powder, pellets or a combination thereof.

In the step of finally mixing the copolymers (I)—(III) or in the preceding step, it is desirable to remove volatile matter, such as the remaining monomers, from the composition. If such volatile matter remains in the composition, the intended effect of the present invention regarding heat resistance, etc., may not be obtained.

In order to obtain a copolymer or a thermoplastic resin composition with excellent heat resistance, the content of volatile matter, including the monomers remaining in each of the copolymers (I)—(III) and in the mixture thereof, is adjusted to less than 2,000 ppm, more preferably less than 1,500 ppm.

The following methods, for example, may be used to reduce the amount of volatile matter remaining in the composition:

In one method, after completion of polymerization, the remaining monomers are removed from the polymerization system by stripping or other procedures to reduce the unreacted monomer content to 2—5% by weight. The copolymer latex obtained is subjected to coagulation at a temperature of from 110 to 130°C and water is evaporated to dry the copolymer to obtain powdery αMS—AN copolymer; the remaining monomers are further removed from the powdery copolymer. According to this method, by, for instance, forming the composition into pellets while effecting degasification by means of a vented extruder, it is possible to reduce the amount of the remaining unreacted monomers to less than 2,000 ppm.

The mixing of the heat-resistant copolymer (I) [and the copolymer (II)] and the copolymer (III) may be effected by mixing said αMS—AN copolymer pellets with the copolymer (III) and again subjecting them to an extruder, or said powdery αMS—AN copolymer which has not yet been treated by an extruder, may be mixed with the copolymer (III) and the resulting mixture may be pelletized while conducting degasification by means of a vented extruder, whereby the remaining unreacted monomer content can be reduced to less than 2,000 ppm.

When using a vented extruder for removing the remaining volatile matter, it is preferred to use an extruder having 2 to 3 vent holes, especially a twin-screw extruder (both screws rotating in the same direction) as this extruder has a sufficient kneading effect and also high degasification performance. In some cases, water may be poured into the barrel of the vented extruder to increase the remaining monomer-removal efficiency (degasification efficiency).

By reducing the remaining monomer content in each of the copolymers (I)—(III) and that in the mixture thereof top 2,000 ppm or less it is possible to obtain a resin having excellent heat resistance.

On the contrary, if the resulting thermoplastic resin contains more than 2,000 ppm of unreacted monomer, this resin has inferior heat resistance and also poor mouldability because much gas scatters in the moulding.

To the thermoplastic resin composition of this invention may be added conventional additives, such as lubricants, flame-retardants, anti-aging agents and ultraviolet absorbing agents.

Also, the heat-resistant copolymer (I), the mixture of the heat-resistant copolymer (I) and the copolymer (II) or the thermoplastic resin obtained by mixing the mixture of the heat-resistant copolymer (I) and the copolymer (II) with the graft copolymer [copolymer (III)] may be further mixed with a heat-resistant

thermoplastic resin such as, for example, polyphenylene oxide, polyethylene terephthalate, polybutylene terephthalate, polyacetal, polyamide, styrene-maleic anhydride copolymer or polycarbonate.

The thus obtained heat-resistant resin composition is useful in fields where heat resistance is required, such as the interior parts of automobiles and parts of electrical appliances.

The invention is explained in further detail referring to the following Examples. In the Examples and Comparative Examples, parts and percentages are by weight unless otherwise specified.

Examples 1—6

Into a nitrogen-purged reactor were charged 200 parts of ion-exchanged water, 2.5 parts of potassium oleate, a mixture of α-methylstyrene and acrylonitrile indicated as monomer A in Table 1, and 0.4 part of t-dodecyl mercaptan, and they were emulsified, with stirring, under a nitrogen atmosphere. The temperature of the contents of the reactor was adjusted to the temperature shown in Table 1, and then a solution of 0.25 part of sodium pyrophosphate, 0.35 part of dextrose and 0.005 part of ferrous sulphate in 20 parts of ion-exchanged water was added, followed by 0.1 part of cumene hydroperoxide to initiate the polymerization. Polymerization was continued for one hour, and then acrylontrile or a mixture of acrylonitrile and α-methylstyrene indicated as monomer B in Table 1 was added continuously over a period of 4 hours. The reaction temperature in the polymerization was maintained at the value shown in Table 1. After completion of the addition, the polymerization was continued for a further 2 hours. During the polymerization reaction, the reaction mixture was sampled at given time intervals and the amounts of unreacted monomers were measured by gas chromatography to determine the αMS:AN ratio in the system.

The resulting copolymer latex was coagulated with calcium chloride, and the copolymer was recovered, washed with water and dried. The powder thus obtained was further dried *in vacuo* at 120°C for 5 hours and then pelletized. Test pieces were prepared from the pellets by an injection moulding machine set at a cylinder temperture of 230°C, and the Vicat softening point of each test piece was measured. In the next test, the cylinder temperature of the injection machine was set at 280°C and the pellets were left in the cylinder for 15 minutes and then subjected to injection moulding. Test pieces were prepared in the same way as described above and their Vicat softening point was determined. Also, these test pieces and the pellets before moulding were separately dissolved in *N,N*-dimethylformamide and the change in the amount of the remaining monomer before and after moulding was examined by gas chromatography.

The powder before pelletization was dissolved in tetrahydrofuran and reprecipitated from isopropanol, and the thus purified powder was subjected to $^{13}C$—NMR measurement. That is, the purified powder was dissolved in deuterated chloroform and tetramethylsilane was added as an internal standard, after which the solution was measured by $^{13}C$—NMR at 25 MHz. Of the peaks appearing at 140—150 ppm, the peak appearing in the range of from 141 to 144 ppm was assigned to the monomer chains (c) —[(B)—(A)—(B)]—, the peak appearing in the range of from 144.5 to 147 ppm to the monomer chains (b) —[(A)—(A)—(B)]—, and the peak appearing in the range from 147.5 to 150 ppm to the monomer chains (a) —[(A)—(A)—(A)]—, and the distribution of each of the monomer chains was determined from the area ratio of each peak. The results are shown in Table 1.

Comparative Examples 1—3

Table 2 shows examples of copolymers which are outside the scope of the present invention.

In comparative Example 1, 0.2 part of sodium formaldehydesulphoxylate, 0.1 part of sodium ethylenediaminetetraacetate and 0.005 part of ferrous sulphate were used in place of the sodium pyrophosphate, dextrose and ferrous sulphate in Example 1, and, after the addition of monomer B, the polymerization was continued for 16 hours. In this case, because the polymerization was conducted at a low temperature, the monomer chain —[(A)—(A)—(A)]— was formed in a large amount which exceeds the range specified in the present invention. Although the copolymer shows a high Vicat softening point, the test piece moulded after a 15 minute residence in the extruder barrel at 280°C had a greatly reduced Vicat softening point and the amount of remaining monomer before moulding was large. This shows that the formation of a large amount of the monomer chain —[(A)—(A)—(A)]— results in a drop in the heat stability of the copolymer. In Comparative Example 2, α-methylstyrene in the monomers employed in Example 1 was used in a greater amount than specified in the present invention. In this case, too, many monomer chains —[(A)—(A)—(A)]— were formed and the effect of the present invention could not be achieved.

Example 7 and Comparative Example 4

(a) Preparation of rubber-modified thermoplastic resin

Into a nitrogen-purged reactor equipped with a stirrer were charged 80 parts of ion-exchanged water, 60 parts of polybutadiene latex (as solids) and one third of an emulsion (a) formed by emulsifying 60 parts of ion-exchanged water, 28 parts of styrene, 12 parts of acrylonitrile, 1 part of potassium oleate and 0.2 part of t-dodecyl mercaptan, and they were emulsified. The temperature was raised to 40°C with stirring under a nitrogen atmosphere, and then a solution of 0.2 part of sodium pyrophosphate, 0.4 part of dextrose and 0.01 part of ferrous sulphate in 20 parts of ion-exchanged water and 0.1 part of cumene hydroperoxide were added to the emulsion, and the resulting mixture was reacted for one hour while maintaining the jacket at 70°C. Then the remainder of the emulsion (a) and 0.1 part of cumene hydroperoxide were added continuously to the polymerization system over a period of 3 hours, followed by a solution of 0.05 part of

sodium pyrophosphate, 0.1 part of dextrose and 0.0025 part of ferrous sulphate in 5 parts of ion-exchanged water and 0.025 part of cumene hydroperoxide, and the resulting mixture was stirred for a further one hour to complete the polymerization.

(b) Preparation of thermoplastic resin composition

The rubber-modified thermoplastic resin thus obtained and the copolymer obtained in Example 1 were mixed in the latex state so that their solids-weight ratio became 67:33 (the diene rubber-like polymer in the mixture composition being about 20%), and an antioxidant was added to the mixture and coagulated with calcium chloride. The coagulate was filtered, washed, dried, further dried *in vacuo* at 120°C for 5 hours and then pelletized. From the pellets thus obtained were prepared test pieces by an injection moulding machine set at a cylinder temperature of 230°C, and their physical properties were determined. The results are shown in Table 3. The grafting degree (the amount of resin component grafted on the rubber component, divided by the amount of rubber component and multiplied by 100) was 48%, and the intrinsic viscosity [η] of the ungrafted component was 0.35 dl/g.

A moulding thermal stability test was conducted by the method described below and the result showed excellent moulding thermal stability of the resin.

For comparison, the physical properties of a resin obtained by mixing said rubber-modified thermoplastic resin and the copolymer latex obtained in Comparative Example 1 in a mixing ratio of 67:33 are also shown in Table 3. This comparative resin showed higher heat resistance than that of Example 7 but was inferior in moulding thermal stability. This is considered attributable to the occurrence of thermal decomposition during moulding because of a greater amount of the monomer chain —[(A)—(A)—(A)]— than the range specified in the present invention. This adversely affects the processability.

(c) Moulding thermal stability test

Using a mould for evaluation of moulding thermal stability, the pelletized material was injection moulded by setting the cylinder temperature at 260°C while changing the injection speed, and the state of moulding thermal stability was examined.

Table 1

| | Example | 1 | 2 | 3 | 4 | 5 | 6 |
|---|---|---|---|---|---|---|---|
| Monomer A (part) | α-Methylstyrene | 70 | 80 | 50 | 60 | 27 | 35 |
| | Acrylonitrile | 9 | 10 | 6 | 8 | 3.5 | 5 |
| Monomer B (part) | α-Methylstyrene | 5 | 0 | 30 | 20 | 52 | 45 |
| | Acrylonitrile | 16 | 10 | 14 | 12 | 17.5 | 15 |
| Polymerization temperature (°C) | | 75 | 70 | 75 | 80 | 75 | 75 |
| αMS/AN in the system (weight ratio) | 1.5 hr. after start of polymerization | 9.2 | 9.3 | 9.4 | 9.4 | 9.2 | 8.9 |
| | 3 hr. after start of polymerization | 8.9 | 9.2 | 8.3 | 8.8 | 8.7 | 8.6 |
| | 4.5 hr. after start of polymerization | 8.1 | 8.2 | 8.2 | 7.6 | 7.8 | 7.9 |
| Chain distribution in copolymer (%) *1 | (a) ⫞(A)-(A)-(A)⫞ | 6.8 | 7.2 | 6.0 | 5.7 | 4.5 | 3.5 |
| | (b) ⫞(A)-(A)-(B)⫞ | 63.4 | 65.2 | 67.3 | 61.0 | 60.0 | 62.3 |
| | (c) ⫞(B)-(A)-(B)⫞ | 29.8 | 27.6 | 26.7 | 33.3 | 35.5 | 34.2 |
| Intrinsic viscosity (dl/g) | [η] (MEK*3 30°C) | 0.35 | 0.38 | 0.41 | 0.37 | 0.42 | 0.37 |

- cont'd -

Table 1 (cont'd)

| | | | | | | | |
|---|---|---|---|---|---|---|---|
| Vicat softening point (°C) *2 | Molded at 230°C | 141 | 143 | 141 | 140 | 140 | 141 |
| | Molded after 15-minutes residence at 280°C | 139 | 140 | 140 | 138 | 138 | 139 |
| Amount of remaining monomer ppm | Before molding | 1100 | 1200 | 750 | 900 | 850 | 950 |
| | Molded after 15 minutes residence at 280°C | 3200 | 4500 | 1800 | 3100 | 2900 | 3200 |

Note: *1: Weight ratio to the total of (a) + (b) + (c).

*2: Measured according to ASTM D-1525. (This applies hereinafter.)

*3: MEK = methyl ethyl ketone.

Table 2

| | Comparative Example | 1 | 2 | 3 |
|---|---|---|---|---|
| Monomer A (part) | α-Methylstyrene | 80 | 88 | 35 |
| | Acrylonitrile | 5 | 4 | 15 |
| Monomer B (part) | α-Methylstyrene | 0 | 0 | 35 |
| | Acrylonitrile | 15 | 8 | 15 |
| Polymerization temperature (°C) | | 40 | 75 | 75 |
| αMS/AN in the system (weight ratio) | 1.5 hr. after start of polymerization | 8.1 | 19.5 | 2.5 |
| | 3 hr. after start of polymerization | 7.3 | 15.3 | 2.4 |
| | 4.5 hr. after start of polymerization | 6.4 | 12.4 | 2.3 |
| Chain distribution in copolymer (%) | (a) -(A)-(A)-(A)- | 17.2 | 16.4 | 1.2 |
| | (b) -(A)-(A)-(B)- | 58.0 | 59.2 | 36.9 |
| | (c) -(B)-(A)-(B)- | 24.8 | 24.4 | 61.9 |
| Intrinsic viscosity (dl/g) | [η] (MEK 30°C) | 0.34 | 0.29 | 0.51 |

- cont'd -

Table 2 (cont'd)

| | | | | |
|---|---|---|---|---|
| Vicat softening temperature (°C) | Molded at 230°C | 146 | 146 | 126 |
| | Molded after 15-minutes resistance at 280°C | 132 | 133 | 125 |
| Amount of remaining monomer (ppm) | Before molding | 1050 | 1200 | 1150 |
| | Molded after 15-minutes resistance at 280°C | 16200 | 15700 | 2500 |

Table 3

| | Example 7 | Comparative Example 4 |
|---|---|---|
| Vicat softening point (°C) & amount of remaining monomer (ppm) (molded at 230°C/molded after 15-minutes residence at 280°C) | 140.5/139<br>1200/2700 | 144.5/130.5<br>1350/16750 |
| Izod impact strength *1 KJ/$m^2$ | 13.7 (=13.9kg cm/$cm^2$) | 13.2 (=13.4 kgcm/$cm^2$) |
| Molding thermal stability | Excellent | Poor |

Note: *1: Measured according to ASTM D-256 (notched). Molded at 230°C.

Examples 8—10 and Comparative Example 5

(a) Heat-resistant copolymer (I)

Heat-resistant copolymers A—1 to A—4 produced in the same manner as in Example 2 are shown in Table 6.

(b) Preparation of copolymer (II)

Into a nitrogen-purged reactor were charged 200 parts of ion-exchanged water, 2.5 parts of potassium oleate, 70 parts of α-methylstyrene, 30 parts of acrylonitrile and 0.4 part of t-dodecyl mercaptan, and the mixture was emulsified with stirring in a nitrogen stream. The internal temperature of the reactor was raised to 40°C, and then a solution of 0.35 part of sodium pyrophosphate, 0.35 part of dextrose and 0.005 part of ferrous sulphate in 20 parts of ion-exchanged water was added thereto, followed by 0.2 part of cumene hydroperoxide to initiate the polymerization. The polymerization was continued for 3 hours while maintaining the polymerizer jacket temperature at 60°C. In the same manner as in the case of A—1 of the above copolymer (I), a copolymer B—1 was recovered in the form of powder. The acrylonitrile content of this copolymer was (I), a copolymer B—1 was recovered in the form of powder. The acrylonitrile content of this copolymer was 29%. Also, the content of monomer chains —[αMS-αMS-αMS]—, —[αMS-α3MS-AN]— and —[AN-αMS-AN]— were 1%, 15% and 84%, respectively. The intrinsic viscosity [η] as measured in methyl ethyl ketone at 30°C was 0.48 dl/g.

There were likewise produced copolymers B-2 and B-3 as shown in Table 7. The results are shown in Table 7.

(c) Preparation of rubber-modified thermoplastic resin (III)

The graft copolymer of Example 7 was used as copolymer C-1.

(d) Preparation of resin composition

The thermoplastic copolymer powder A-1, the thermoplastic copolymer powder B-1 and the rubber-modified thermoplastic resin powder C-1 were mixed in the proportions shown in Table 5 and the mixture was melt-extruded while effecting degasification by means of a vented 50 mm. diameter extruder (cylinder temperature set at 260°C) to obtain pellets. These pellets were dried at 80°C for more than 2 hours and formed into test pieces using an injection machine (Toshiba Machinery IS 70A) at a cylinder temperature of 240°C. and their properties were determined. The results are shown in Table 5. The testing method and conditions were as follows:

Falling weight impact strength
(breaking energy at the time of fall)

| | |
|---|---|
| Falling weight load: | 10 kg |
| Falling distance: | 0.5 m |
| Radius of curvature of falling rod end: | 12.7 mm |
| Diameter of test piece receiving pan: | 45 mm |
| Test piece thickness: | 2.4 mm |

Flow property (bar flow)

| | |
|---|---|
| Moulding machine: | Toshiba Machinery 1S-50A |
| Injection pressure: | 82.4 MPa (840 kg/cm$^2$) |
| Mould: | 20×2 mm (width × thickness) |
| Mould temperature: | 50°C |

Heat resistance
1) Heat deformation temperature: ASTM D—648 Test piece: 0.5″ × 0.5″ × 5″ (1.27 × 1.27 × 12.7 cm)
Condition: loading in 264 psi (1.82 MPa (18.56 kg/cm$^2$))

2) Heat shrinkage
Test piece: 0.125″ × 0.5″ × 5″ (0.32 × 1.27 × 12.7 cm)
Condition: Allowed to stand in a 120°C Geer oven for 2 hours.
Measurement: Shrinkage in the 5 inch (12.7 cm) direction.

Table 5

| | Example | | | Comparative Example |
|---|---|---|---|---|
| | 8 | 9 | 10 | 5 |
| Copolymer A - 1 (part) | 47 | 35 | 27 | - |
| Copolymer B - 1 (part) | 20 | 32 | 40 | 67 |
| [A/(A + B)] | [0.7] | [0.52] | [0.4] | |
| Rubber-modified thermoplastic resin C - 1 (part) | 33 | 33 | 33 | 33 |
| Remaining monomer (ppm) | 1150 | 1400 | 950 | 1200 |
| Impact strength | | | | |
| 1) Izod impact strength ($KJ/m^2$) | 19.7 (20Kg.cm/$cm^2$) | 22.6 (23Kg.cm/$cm^2$) | 23.6 (24Kg.cm/$cm^2$) | 31.5 (32Kg.cm/$cm^2$) |
| 2) Falling weight impact strength (KJ) | 1960 (200 Kg-m) | 2254 (230 Kg-m) | 2352 (240 Kg-m) | 2646 (270 Kg-m) |
| Flow property (cm) | 19 | 18 | 17 | 13 |
| Heat resistance | | | | |
| 1) Heat deformation temperature (°C) | 110 | 108 | 108 | 104 |
| 2) Heat shrinkage | 0.8 | 1.3 | 1.8 | 8.2 |

Examples 11—15 and Comparative Example 6

The compositions prepared using the copolymers (I) and (II) shown in Table 6 and Table 7 are shown in Table 8.

Table 6

| | A - 1 | A - 2 | A - 3 | A - 4 |
|---|---|---|---|---|
| Monomer composition (%) | | | | |
| α-Methylstyrene | 79 | 81 | 76 | 78 |
| Acrylonitrile | 21 | 19 | 24 | 20 |
| Methyl methacrylate | 0 | 0 | 0 | 2 |
| [η] dl/g | 0.35 | 0.38 | 0.38 | 0.36 |
| Chain distribution in copolymer (%) | | | | |
| ⟊(A)-(A)-(A)⟊ | 8.6 | 9.8 | 6.5 | - |
| ⟊(A)-(A)-(B)⟊ | 66.4 | 67.0 | 62.5 | - |
| ⟊(B)-(A)-(B)⟊ | 25.0 | 23.2 | 31.0 | - |

Table 7

| | B - 1 | B - 2 | B - 3 |
|---|---|---|---|
| Monomer composition (%) | | | |
| α-Methylstyrene | 71 | 73 | 52 |
| Acrylonitrile | 29 | 27 | 28 |
| Styrene | 0 | 0 | 20 |
| [η] dℓ/g | 0.48 | 0.52 | 0.50 |
| Chain distribution in copolymer (%) | | | |
| ⟊(A)-(A)-(A)⟊ | 1.0 | 2.1 | - |
| ⟊(A)-(A)-(B)⟊ | 15.0 | 34.1 | - |
| ⟊(B)-(A)-(B)⟊ | 84.0 | 63.8 | - |

Table 8

| | Example | | | | | Comparative Example |
|---|---|---|---|---|---|---|
| | 11 | 12 | 13 | 14 | 15 | 6 |
| Copolymer A - 1 (part) | 47 | 47 | | | | |
| " A - 2 (part) | | | 47 | | | |
| " A - 3 (part) | | | | 47 | | |
| " A - 4 (part) | | | | | 47 | |
| Copolymer B - 1 (part) | | | 20 | | 20 | |
| " B - 2 (part) | 20 | | | | | 47 |
| " B - 3 (part) | | 20 | | 20 | | 20 |
| A/(A + B) (by weight) | 0.7 | 0.7 | 0.7 | 0.7 | 0.7 | 0 |
| Rubber-modified thermo-plastic resin C - 1 (part) | 33 | 33 | 33 | 33 | 33 | 33 |
| Remaining monomer (ppm) | 1350 | 1050 | 950 | 1200 | 1300 | 1400 |

- cont'd -

Table 9 (cont'd)

| | | | | | | |
|---|---|---|---|---|---|---|
| Impact strength | | | | | | |
| 1) Izod impact strength ($KJ/m^2$) | 15.7 (16Kg-cm/$cm^2$) | 22.6 (23Kg-cm/$cm^2$) | 14.7 (15Kg-cm/$cm^2$) | 23.6 (24Kg-cm/$cm^2$) | 17.7 (18Kg-cm/$cm^2$) | 22.6 (23Kg-cm/$cm^2$) |
| 2) Falling-weight impact strength (KJ) | 1568 (160Kg-m) | 2254 (230Kg-m) | 1372 (140Kg-m) | 2744 (280Kg-m) | 1666 (170Kg-m) | 2744 (280Kg-m) |
| Flow property (cm) | 17 | 19 | 16 | 20 | 19 | 23 |
| Heat resistance | | | | | | |
| 1) Heat deformation temperature (°C) | 109 | 106 | 110 | 104 | 108 | 101 |
| 2) Heat shrinkage (%) | 0.6 | 0.9 | 0.3 | 2.0 | 0.7 | 7.4 |

## Claims

1. A process for producing a heat-resistant copolymer containing from 74 to 82% by weight of α-methylstyrene (A) and from 18 to 26% by weight of acrylonitrile (B) and (a) from 0 to 15% by weight of monomer chains —[(A)—(A)—(A)]—, (b) 50% by weight or more of monomer chains —[(A)—(A)—(B)]—, and (c) from 50 to 0% by weight of monomer chains —[(B)—(A)—(B)]—, the total of (a), (b) and (c) being 100% by weight which process comprises initially feeding (A) α-methylstyrene and (B) acrylonitrile in a (A) to (B) weight ratio of less than 9:1, emulsifying the mixture, initiating the polymerization thereof at a temperature in the range of from 67 to 90°C. and continuing the polymerization in said temperture range while supplying acrylonitrile or a mixture of α-methylstyrene and acrylonitrile continuously or intermittently so that the weight ratio of α-methylstyrene to acrylonitrile of the unreacted monomers in the system is maintained at 7:1 or more.

2. A process according to Claim 1, wherein from 74 to 82% by weight of α-methylstyrene, from 18 to 26% by weight of acrylonitrile and from 0 to 10% by weight of other monomer(s) copolymerizable therewith (but in each case totalling 100%) are employed as the components of the copolymer.

3. A process according to Claim 1 or 2, wherein the residual monomer content in the copolymer is 2,000 ppm or less.

4. A process according to any one of Claims 1 to 3, wherein the polymerization is effected by emulsion polymerization.

5. A process according to any one of Claims 1 to 4, wherein a redox catalyst based on a sugar-containing iron pyrophosphate formulation is used as the polymerization catalyst.

6. A process according to any one of Claims 1 to 5, wherein α-methylstyrene and acrylonitrile are charged in an α-methylstyrene to acrylonitrile weight ratio of from 6.5:1 to 8.5:1.

7. A process according to any one of Claims 1 to 6, wherein the polymerization temperature is from 70 to 85°C.

8. A process according to any one of Claims 1 to 7, wherein the weight ratio of α-methylstyrene to acrylonitrile in the unreacted monomers in the polymerization is from 7:1 to 9.5:1.

9.· A thermoplastic resin composition comprising a heat-resistant copolymer (I) having an intrinsic viscosity of 0.2 to 0.7 dl/g. and as prepared by the process as claimed in any one of claims 1 to 8, a copolymer (II) having an intrinsic viscosity of 0.3 to 0.8 dl./g. and (a) consisting of, as its constituents, from 50 to 74% by weight of α-methylstyrene, from 26 to 33% by weight of an alkenyl cyanide and from 0 to 24% by weight of other monomer(s) copolymerisable with these monomers; and (b) the weight ratio of the heat-resistant copolymer (I) to the total of the heat-resistant copolymer (I) and the copolymer (II) being from 0.4:1 to 0.8:1; and from 20 to 50% by weight, based on the total weight of copolymers (I), (II) and (III) of a rubber-modified thermplastic resin (III) obtained by graft-copolymerizing from 30 to 80% by weight of an aromatic alkenyl monomer, an alkenyl cyanide monomer on from 20% to 70% by weight of a rubber-like polymer; the total residual monomer content in the composition being 2000 ppm or less and the total rubber content in the composition being from 10 to 30% by weight; wherein when copolymer (II) consists of (A) α-methylstyrene and (B) acrylonitrile copolymer (I) contains from 0 to 15% by weight of monomer chains —[(A)—(A)—(A)]—, from 55 to 100% by weight of monomer chains —[(A)—(A)—(B)]— and from 45 to 0% by weight of monomer chains —[(B)—(A)—(B)], totalling 100%, and copolymer (II) has a ratio of the total of monomer chains —[(A)—(A)—(A)]— and —[(A)—(A)—(B)]— being 50% by weight or less of the total of said two monomer chains plus another monomer chain —[(B)—(A)—(B)—]; the intrinsic viscosities being measured in methyl ethyl ketone at 30°C.

10. A thermoplastic resin composition according to Claim 9, wherein the weight ratio of the copolymer (I) to the total of the copolymer (I) and the copolymer (II) is from 0.55:1 to 0.75:1.

11. A thermoplastic resin composition according to any Claims 9 to 10, wherein the copolymer (II) consists of from 60 to 72% by weight of α-methylstyrene, from 28 to 31% by weight of acrylonitrile and from 0 to 24% by weight of a monomer copolymerizable therewith.

12. A thermoplastic resin composition according to Claim 9, 10 or 11, wherein the intrinsic viscosity [η] of the copolymer (II) as measured in methyl ethyl ketone at 30°C is from 0.35 to 0.7 dl/g.

13. A thermoplastic resin composition according to claim 9, 10, 11 or 12, wherein the rubber-modified thermoplastic resin (III) has a grafting degree of 25% or more and an intrinsic viscosity of the copolymer component ungrafted thereon of from 0.2 to 1.0 dl/g.

14. A thermoplastic resin composition according to any of Claims 9 to 13, wherein the rubber content in the entire composition is from 10 to 25% by weight.

## Patentansprüche

1. Verfahren zur Herstellung eines hitzebeständigen Copolymers aus von 74—84 Gew.% α-Methylstyrol (A) und von 18 bis 26 Gew.% Acrylnitril (B) und (a) von 0 bis 15 Gew.% Monomerketten —[(A)—(A)—(A)]—, (b) 50 Gew.% oder mehr Monomerketten —[(A)—(A)—(B)]— und (c) von 50 bis 0 Gew.% Monomerketten —[(B)—(A)—(B)]—, wobei die gesamte Menge an (a), (b) und (c) 100 Gew.% beträgt, dadurch gekennzeichnet, daß zuerst (A) α-Methylstyrol und (B) Acrylnitril in einem Gewichtsverhältnis von (A) zu (B) von unter 9:1 eingespeist werden, das Gemisch emulgiert, seine

Polymerisation bei einer Temperatur im Bereich von 67 bis 90°C initiiert und in dem Temperaturbereich fortgesetzt wird, wobei Acrylnitril oder ein Gemisch von α-Methylstyrol und Acrylnitril kontinuierlich oder diskontinuierlich so zugegeben wird, daß das Gewichtsverhältnis von α-Methylstyrol zu Acrylnitril der nicht umgesetzten Monomeren in dem System auf 7:1 oder darüber gehalten wird.

2. Verfahren nach Anspruch 1, in dem von 74 bis 82 Gew.% α-Methylstyrol, von 18 bis 26 Gew.% Acrylnitril und von 0 bis 10 Gew% mindestens eines anderen damit copolymerisierbaren Monomers (jedoch in jeden Fall in einer Gesamtmenge von 100%) als Komponenten des Copolymers verwendet werden.

3. Verfahren nach Anspruch 1 oder 2, in dem ein Copolymer mit einem Restmonomergehalt von 2000 ppm oder weniger verwendet wird.

4. Verfahren nach einem der Ansprüche 1 bis 3, in dem die Polymerisation durch Emulsionspolymerisation durchgeführt wird.

5. Verfahren nach einem der Ansprüche 1 bis 4, in dem ein Redoxkatalysator auf der Basis eines Kohlenhydrats enthaltenden Eisenpyrophosphats als Polymerisationskatalysator verwendet wird.

6. Verfahren nach einem der Ansprüche 1 bis 5, in dem α-Methylstyrol und Acrylnitril in einem Gewichtsverhältnis von α-Methylstyrol zu Acrylnitril von 6,5:1 bis 8,5:1 eingebracht werden.

7. Verfahren nach einem der Ansprüche 1 bis 6, in dem eine Polymerisationstemperatur von 70 bis 85°C verwendet wird.

8. Verfahren nach einem der Ansprüche 1 bis 7, in dem ein Gewichtsverhältnis von α-Methylstyrol zu Acrylnitril in den nicht umgesetzten Monomeren in der Polymerisation von 7:1 bis 9,5:1 verwendet wird.

9. Thermoplastische Kunstharzzusammensetzung aus einem hitzebeständigen Copolymer (I) mit einer Strukturviskosität von 0,2 bis 0,7 dl/g, hergestellt im Verfahren gemäß einem der Ansprüche 1 bis 8, einem Copolymer (II) einer Strukturviskosität von 0,3 bis 0,8 dl/g, wobei (a) seine Bestandteile von 50 bis 74 Gew.% α-Methylstyrol, von 26 bis 33 Gew% eines Alkenylzyanids und von 0 bis 24 Gew.% mindestens eines anderen, damit copolymerisierbaren Monomers sind, und

(b) das Gewichtsverhältnis des hitzebeständigen Copolymers (I) zur Gesamtmenge des hitzebeständigen Copolymers (I) und des Copolymers (II) von 0,4:1 bis 0,8:1 beträgt, und

von 20 bis 50 Gew.%, bezogen auf die Gesamtmenge an Copolymere (I), (II) und (III), eines mit Kautschuk modifizierten thermoplastischen Kunstharzes (III), das durch Pfropfcopolymerisation von 30 bis 80 Gew.% eines aromatischen Alkenylmonomers und eines Alkenylzyanidmonomers auf von 20 bis 70 Gew.% eines kautschukählichen Polymers erhältlich ist, wobei

die Gesamtrestmonomermenge in der Zusammensetzung 2000 ppm oder weniger und der Gesamtkautschukgehalt der Zusammensetzung von 10 bis 30 Gew.% beträgt,

wenn das Copolymer (II) aus (A) α-Methylstyrol und (B) Acrylnitril besteht, das Copolymer (I) von 0 bis 15 Gew.% Monomerketten —[(A)—(A)—(A)]—, von 55 bis 100 Gew.% Monomerketten —[(A)—(A)—(B)]— und von 45 bis 0 Gew.% Monomerketten —[(B)—(A)—(B)]— enthält, wobei die Gesamtmenge 100% beträgt,

das Copolymer (II) ein Verhältnis der Gesamtmenge an Monomerketten —[(A)—(A)—(A)]— und —[(A)—(A)—(B)]— von 50 Gew.% oder weniger der Gesamtmenge der beiden Monomerketten plus einer anderen Monomerkette —[(A)—(A)—(B)]— hat und

die Strukturviskosität in Methylethylketon bei 30°C gemessen wurden.

10. Thermoplastische in Kunstharzzusammensetzung nach Anspruch 9, in der das Gewichstverhältnis des Copolymers (I) zur Gesamtmenge des Copolymers (I) und des Copolymers (II) von 0,55:1 bis 0,75:1 beträgt.

11. Thermoplastische Kunstharzzusammensetzung nach Anspruch 9 oder 10, in der das Copolymer (II) aus von 60 bis 72 Gew.% α-Methylstyrol, von 28 bis 31 Gew.% Acrylnitril und von 0 bis 24 Gew.% eines damit copolymerisierbaren Monomers besteht.

12. Thermoplastische Kunstharzzusammensetzung nach Anspruch 9, 10 oder 11, in der die Strukturviskosität [η] des Copolymers (II), bestimmt in Methylethylketon bei 30°C, von 0,35 bis 0,7 dl/g beträgt.

13. Thermoplastische Kunstharzzusammensetzung nach Anspruch 9, 10, 11 oder 12, in der das mit Kautschuk modifizierte, thermoplastische Kunstharz (III) einem Pfropfgrad von 25% oder und darüber eine Strukturviskosität der darauf nicht gepfropften Copolymerkomponente von 0,2 bis 1,0 dl/g hat.

14. Thermoplastische Kunstharzzusammensetzung nach einem der Ansprüche 9 bis 13, in der der Kautschukgehalt in der Gesamtzusammensetzung von 10 bis 25 Gew.% beträgt.

**Revendications**

1. Procédé de préparation d'un copolymère résistant à la chaleur contenant de 74 à 82% en poids d'α-méthylstyrène (A) et de 18 à 26% en poids d'acrylonitrile (B) et (a) de 0 à 15% en poids de chaînes de monomères —[(A)—(A)—(A)]—, (b) 50% ou plus en poids de chaînes de monomères —[(A)—(A)—(B)]— et (c) de 50 à 0% en poids de chaînes de monomères —[(B)—(A)—(B)]—, le total de (a), (b) et (c) représentant 100% en poids, lequel procédé comprend l'alimentation initiale en α-méthylstyrène (A) et acrylonitrile (B) dans un rapport pondéral de (A) à (B) inférieur a 9:1, l'émulsification du mélange; l'initiation de la polymérisation de celui-ci à une température dans la gamme de 67 à 90°C, et la poursuite de la

polymérisation à cette gamme de température tout en apportant de l'acrylonitrile ou un mélange d'α-méthylstyrène et d'acrylonitrile de manière continue ou intermittente, de sorte que le rapport pondéral d'α-méthylstyrène à l'acrylonitrile des monomères n'ayant pas réagi soit maintenu à 7:1 ou plus.

2. Procédé selon la revendication 1 dans lequel de 74 à 82% en poids d'α-méthylstyrène, de 18 à 26% en poids d'acrylonitrile et de 0 à 10% en poids d'autre(s) monomère(s) copolymérisable(s) avec ceux-ci (mais totalisant dans chaque cas 100%) sont employés en tant que constituants du copolymère.

3. Procédé selon les revendications 1 ou 2, dans lequel la teneur en monomère résiduel dans le copolymère est de 2 000 ppm ou moins.

4. Procédé selon l'une quelconque des revendications 1 à 3, dans lequel la polymérisation est effectuée par polymérisation par émulsion.

5. Procédé selon l'une quelconque des revendications 1 à 4, dans lequel un catalyseur redox basé sur une formulation de pyrophosphate de fers contenant un sucre est utilisé comme catalyseur de polymérisation.

6. Procédé selon l'une quelconque des revendications 1 à 5, dans lequel l'α-méthylstyrène et l'acrylonitrile sont chargés en un rapport pondéral d'α-méthylstyrène à acrylonitrile de 6,5:1 à 8,5:1.

7. Procédé selon l'une quelconque des revendications 1 à 6, dans lequel la température de polymérisation est de 70 à 85°C.

8. Procédé selon l'une quelconque des revendications 1 à 7, dans lequel le rapport pondéral d'α-méthylstyrène à acrylonitrile dans les monomères n'ayant pas réagi dans la polymérisation est de 7:1 à 9,5:1.

9. Composition de résine thermoplastique comprenant un copolymère résistant à la chaleur (I) ayant une viscosité intrinsèque de 0,2 à 0,7 dl/g et préparé selon le procédé tel que revendiqué dans l'une quelconque des revendications 1 à 8, un copolymère (II) ayant une viscosité intrinsèque de 0,3 à 0,8 dl/g et (a) comprenant comme constituants de 50 à 74% en poids d'α-méthylstyrène, de 26 à 33% en poids d'un cyanure d'alcényle et de 0 à 24% en poids d'autres monomères copolymérisables avec ces monomères; et (b) le rapport pondéral du copolymère thermo-résistant (I) au total du copolymère thermorésistant (I) et du copolymère (II) étant de 0,4:1 à 0,8:1; et de 20 à 50% en poids, basé sur le poids total des copolymères (I), (II) et (III) d'une résine thermoplastique de caoutchouc modifié (III) obtenue par copolymérisation avec greffage de 30 à 80% en poids d'un monomère alcényle aromatique, un monomère cyanure d'alcényle sur de 20% à 70% en poids d'un polymère du genre caoutchouc; la teneur totale en monomère résiduel dans la composition étant de 2 000 ppm ou moins et la teneur totale en caoutchouc dans la composition étant de 10 à 30% en poids; dans laquelle quand le copolymère (II) consiste en (A) α-méthylstyrène et (B) le copolymère d'acrylonitrile (I) contient de 0 à 15% en poids de chaînes de monomères —[(A)—(A)—(A]—, de 55 à 100% en poids de chaînes de monomères —[(A)—(A)—(B)]—, et de 45 à 0% en poids de chaînes de monomères —[(B)—(A)—(B)], totalisant 100%, et le copolymère (II) a un rapport du total des chaînes de monomères —[(A)—(A)—(A)]— et —[(A)—(A)—(B)]— de 50% en poids ou moins du total desdites deux chaînes de monomères plus une autre chaîne de monomères —[(B)—(A)—(B)—]; la viscosité intrinsèque étant mesurée dans la méthyléthyl-cétone à 30°C.

10. Composition de résine thermoplastique selon la revendication 9, dans laquelle le rapport pondéral du copolymère (I) au total du copolymère (I) et du copolymère (II) est de 0,55:1 à 0,75:1.

11. Composition de résine thermoplastique selon l'une quelconque des revendication 9 ou 10, dans laquelle le copolymère (II) consiste en de 60 à 72% en poids d'α-méthylstyrène, de 28 à 31% en poids d'acrylonitrile et de 0 à 24% en poids d'un monomère copolymèrisable avec ceux-ci.

12. Composition de résine thermoplastique selon la revendications 9, 10 ou 11, dans laquelle la viscosité intrinsèque [η] du copolymère (II) telle que mesurée dans la méthyléthyl-cétone à 30°C est de 0,35 à 0,7 dl/g.

13. Composition de résine thermoplastique selon les revendications 9, 10, 11 ou 12, dans laquelle la résine thermoplastique en caoutchouc modifié (III) à un degré de greffage de 25% ou plus et une viscosité intrinséque du composant copolymère non greffé de 0,2 à 1,0 dl/g.

14. Composition de résine thermoplastique selon l'une quelconque des revendications 9 à 13, dans laquelle la teneur en caoutchouc de la composition entière est de 10 à 25% en poids.